# EUROPEAN PATENT APPLICATION

(11) **EP 4 729 851 A1**
(43) Date of publication of application: **22.04.2026**
(21) Application number: 25209839.7
(22) Date of filing: 20.10.2025
(51) Int. Cl.: F25B 1/00, F24F 11/30, F24F 11/36, F25B 13/00, F25B 49/00

(54) **AIR CONDITIONER, DETECTION DEVICE, REFRIGERANT LEAK DETECTION METHOD, PROGRAM, AND STORAGE MEDIUM**

(30) Priority: 21.10.2024 JP 2024185221
(71) Applicant: Panasonic Corporation, Osaka 571-8501 (JP); Fujitsu General Limited, Kawasaki-shi, Kanagawa 213-8502 (JP); Bosch Home Comfort Japan, Inc., Tokyo 105-0022 (JP)
(72) Inventor: YAMADA, Yuya, Kadoma-shi, Osaka, 571-0057 (JP); HIWATA, Akira, Kadoma-shi, Osaka, 571-0057 (JP)
(74) Representative: Eisenführ Speiser

(57) **Abstract**

An air conditioner, a detection device, a refrigerant leak detection method, a program, and a storage medium capable of detecting a rapid leak of a flammable refrigerant are provided. The air conditioner uses a flammable refrigerant. The air conditioner comprises a refrigerant pipe through which a refrigerant flows, and comprises a pressure sensor and a controller. The pressure sensor is provided in the refrigerant pipe and acquires pressure information related to a pressure of the refrigerant in the refrigerant pipe. The controller acquires the pressure information by the pressure sensor, determines, based on the pressure information, whether or not change in pressure within a predetermined period is larger than a change threshold, and detects a rapid leak of the refrigerant based on a determination result.

## Description

### TECHNICAL FIELD

The present disclosure relates to an air conditioner, a detection device, a refrigerant leak detection method, a program, and a storage medium.

### BACKGROUND ART

In related art, as described in Patent Document 1, there is known a technique of detecting whether or not a flammable refrigerant leaks from an air conditioner using a refrigerant detection sensor arranged in a casing of the air conditioner. The refrigerant detection sensor is a gas sensor, and detects the presence of a specific type of refrigerant.

### PATENT DOCUMENT

Patent Document 1: JP 6065962 B

### SUMMARY

### PROBLEMS TO BE SOLVED BY THE INVENTION

However, the air conditioner in the related art can detect only the presence or absence of refrigerant leak. Thus, in the related art, there is no means for detecting a leakage speed, and there is a problem that a rapid leak cannot be detected.

An object of the present disclosure is to provide an air conditioner, a detection device, a refrigerant leak detection method, a program, and a storage medium capable of detecting a rapid leak of a flammable refrigerant.

### SOLUTIONS TO THE PROBLEMS

In order to solve the above-described problems, the present disclosure provides an air conditioner, a detection device, a refrigerant leak detection method, a program, and a storage medium.

An air conditioner according to one aspect of the present disclosure uses a flammable refrigerant. The air conditioner comprises a refrigerant pipe through which a refrigerant flows, and comprises a pressure sensor and a controller. The pressure sensor is provided in the refrigerant pipe and acquires pressure information related to a pressure of the refrigerant in the refrigerant pipe. The controller acquires the pressure information by the pressure sensor, determines, based on the pressure information, whether or not change in pressure within a predetermined period is larger than a change threshold, and detects a rapid leak of the refrigerant based on a determination result.

A detection device according to one aspect of the present disclosure detects refrigerant leak from an air conditioner. The detection device comprises a communicator and a controller. The communicator acquires pressure information related to a pressure of a refrigerant flowing through a refrigerant pipe of the air conditioner. The controller determines, based on the pressure information, whether or not change in pressure within a predetermined period is larger than a change threshold, and detects a rapid leak of the refrigerant based on a determination result.

A refrigerant leak detection method according to one aspect of the present disclosure detects refrigerant leak from an air conditioner, and can be performed by an air conditioner. The refrigerant leak detection method comprises acquiring pressure information related to a pressure of a refrigerant flowing through a refrigerant pipe of the air conditioner by a pressure sensor provided in the refrigerant pipe; determining, based on the pressure information, whether or not change in pressure within a predetermined period is larger than a change threshold; and detecting a rapid leak of the refrigerant based on a determination result.

A refrigerant leak detection method according to one aspect of the present disclosure detects refrigerant leak from an air conditioner, and can be performed by a detection device. The refrigerant leak detection method comprises acquiring pressure information related to a pressure of a refrigerant flowing through a refrigerant pipe of the air conditioner; determining, based on the pressure information, whether or not change in pressure within a predetermined period is larger than a change threshold; and detecting a rapid leak of the refrigerant based on a determination result.

A program according to another aspect of the present disclosure causes an air conditioner to execute the refrigerant leak detection method or causes a detection device to execute the refrigerant leak detection method.

A storage medium according to another aspect of the present disclosure is a non-transitory computer-readable storage medium in which a computer program is stored. When the computer program is executed by a processor, a refrigerant leak detection method is implemented.

### EFFECTS OF THE INVENTION

In the present disclosure, the air conditioner, the detection device, the refrigerant leak detection method, the program, and the storage medium can detect a rapid leak of a flammable refrigerant.

### BRIEF DESCRIPTION OF THE DRAWINGS

Fig. 1 is a block diagram illustrating an example of a schematic configuration of an air conditioner according to a first embodiment;
Fig. 2 is a schematic view of a refrigeration cycle according to the first embodiment;
Fig. 3 is a flowchart of an example of a refrigerant leak detection method according to the first embodiment;
Fig. 4A is a schematic view of change in pressure of a refrigerant at a normal time;
Fig. 4B is a schematic view of change in pressure of a refrigerant when a rapid leak occurs;
Fig. 5 is a flowchart of another example of the refrigerant leak detection method according to the first embodiment;
Fig. 6 is a schematic view of the refrigeration cycle according to the first embodiment;
Fig. 7 is a flowchart of an example of a refrigerant leak detection method according to a second embodiment;
Fig. 8 is a schematic view of change in pressure of a refrigerant when a minute leak occurs;
Fig. 9 is a flowchart of an example of a refrigerant leak detection method according to a third embodiment;
Fig. 10A is a block diagram illustrating an example of a schematic configuration of a detection device according to a fourth embodiment;
Fig. 10B is a block diagram illustrating another example of the schematic configuration of the detection device according to the fourth embodiment; and
Fig. 11 is a flowchart of an example of a refrigerant leak detection method according to the fourth embodiment.

### DETAILED DESCRIPTION

### <<Technical Concept>>

Prior to describing specific embodiments of an air conditioner, a detection device, a refrigerant leak detection method, a program, and a storage medium according to the present disclosure, first, technical concept described in the present disclosure will be described with reference to an example. In this example, the air conditioner exerts an air conditioning function using a refrigerant having flammability (that is, a flammable refrigerant).

In recent years, from the viewpoint of prevention of global warming, it is required to use a refrigerant having a low global warming potential (GWP). As a refrigerant having a small GWP, for example, propane (R290), or the like, has been studied. A refrigerant such as propane has flammability, and thus, there is a risk of ignition when the refrigerant leaks from a refrigerant pipe. In a case where a refrigerant leakage speed is relatively high, a large combustible region is easily formed in a short period as compared with a case where the refrigerant leakage speed is relatively low. Thus, if a rapid leak of the flammable refrigerant occurs, a probability of ignition increases.

Main concept of the refrigerant leak detection method of the present disclosure is to detect a rapid leak of a flammable refrigerant in an air conditioner. The rapid leak of the refrigerant in the present disclosure means leak that proceeds at a leakage speed higher than a predetermined value. The refrigerant leak detection method of the present disclosure determines whether or not the refrigerant is leaking rapidly, based on change in pressure of the refrigerant flowing in a refrigerant pipe of the air conditioner. For example, if a pressure sensor determines that a pressure of a refrigerant gas in the refrigerant pipe is rapidly decreasing, the rapid leak can be detected. The technique of the present disclosure makes it possible to detect the rapid leak, so that it is also possible to take appropriate measures in response to detection of the rapid leak of the refrigerant.

Such a refrigerant leak detection method can be performed by the air conditioner. Further, the refrigerant leak detection method can also be performed by a detection device that is not the air conditioner, for example, a server or a terminal device communicatively connected to the air conditioner.

Each of the embodiments described below illustrates an example of the present disclosure. Numerical values, shapes, configurations, steps, order of steps, and the like, described in each of the following embodiments are merely examples, and do not limit the present disclosure. Among the components in the following first embodiment, components not recited in the independent claim indicating the most generic concept are described as optional components.

In each of the embodiments described below, modifications may be described for specific elements, and appropriate combination of arbitrary configurations is included for other elements, and each effect is achieved in the combined configuration. In the embodiment, by combining the configurations of the respective modifications, the effects of the respective modifications are obtained.

In the following detailed description, the terms "first", "second", and the like, are only used for description, and should not be understood as explicitly or implying relative importance or a rank of a technical feature. Features limited to "first" and "second" are intended to imply the inclusion of one or more such features.

### <<First Embodiment>>

Hereinafter, a first embodiment of an air conditioner, a detection device, a refrigerant leak detection method, a program, and a storage medium according to the present disclosure will be described in detail with reference to the drawings as appropriate. The air conditioner sets a specific internal space as a target of air conditioning control (hereinafter, referred to as a control space), and conditions air in the control space.

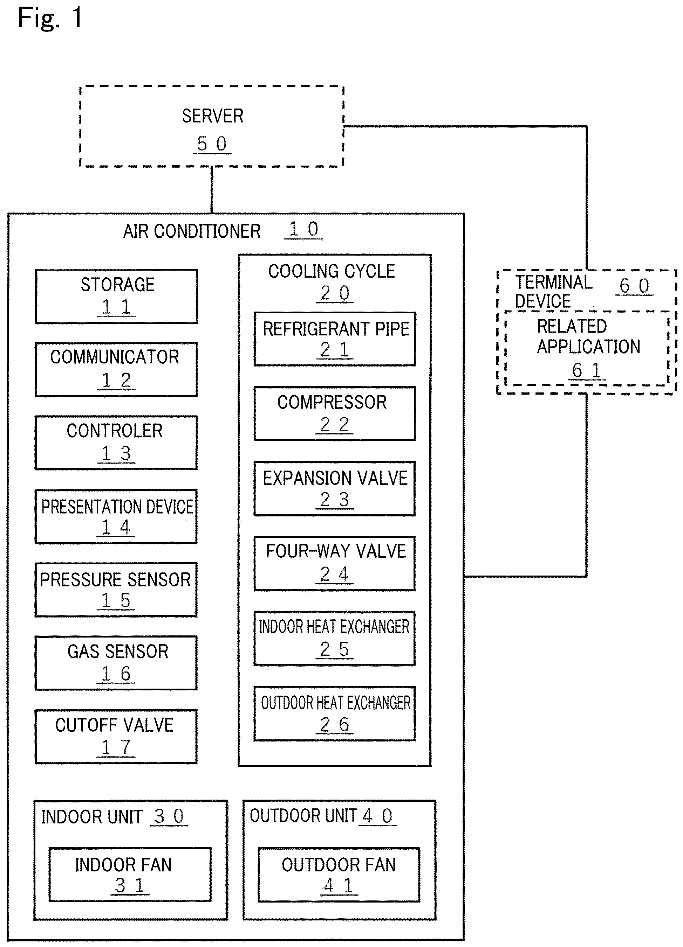

Fig. 1 is a block diagram illustrating an example of a schematic configuration of an air conditioner 10 according to the first embodiment. The air conditioner 10 can execute a refrigerant leak detection method to detect rapid refrigerant leak.

In the embodiment of Fig. 1, the air conditioner 10 includes a storage 11, a communicator 12, a controller 13, a presentation device 14, a pressure sensor 15, and a refrigeration cycle 20. The refrigeration cycle 20 includes a refrigerant pipe 21, a compressor 22, an expansion valve 23, a four-way valve 24, an indoor heat exchanger 25, and an outdoor heat exchanger 26. The air conditioner 10 that can operate only one of a cooling cycle and a heating cycle does not have to include the four-way valve 24.

A flammable refrigerant flows through the refrigerant pipe 21, and a flow direction of the refrigerant varies depending on an operation mode (cooling mode or heating mode) of the air conditioner 10. Examples of the flammable refrigerant include R-290, R-32, R-1234yf, R-1234ze, R-600a, R-1270, and R-717.

The air conditioner 10 can be connected to a terminal device 60 and/or a server 50 via the communicator 12. For example, the air conditioner 10 may be connected to the terminal device 60 that is a remote controller of the air conditioner 10 via infrared rays. The air conditioner 10 may be connected to the terminal device 60, which is a smartphone of a user of the air conditioner 10, via the Internet. Further, the air conditioner 10 may be connected to the server 50 via the Internet.

Hereinafter, outline of each component will be described.

### <Air Conditioner 10>

The air conditioner 10 sets, for example, an internal space of a room in a house or an office as a control space to be subjected to air conditioning control. The air conditioner 10 illustrated in Fig. 1 includes an indoor unit 30 provided on a wall surface or a ceiling of the control space, and an outdoor unit 40 provided outdoors, in a central air conditioning room other than the control space, or the like. The air conditioner 10 has, for example, a cooling function, a heating function, a dehumidifying function, and/or an air cleaning function. Note that the stationary air conditioner 10 does not have to include the outdoor unit 40. Components other than pipes between the indoor unit 30 and the outdoor unit 40, such as the controller 13 and the compressor 22, can be arranged in the casing of the indoor unit 30 or the outdoor unit 40.

### <Storage 11>

The storage 11 is a recording medium that records various kinds of information and control programs, and may be a memory that functions as a work area of the controller 13. The storage 11 is implemented by, for example, a flash memory, a random access memory (RAM), a read only memory (ROM), other storage devices, or an appropriate combination thereof.

The storage 11 may store a reference, a threshold, and the like, for refrigerant leak detection, and may store, for example, a threshold for detecting whether the refrigerant is rapidly leaking. Information acquired by various sensors such as the pressure sensor 15 can be stored in the storage 11. Information acquired from the terminal device 60 or the server 50 can also be stored in the storage 11. These pieces of information can be read by the controller 13 when the refrigerant leak detection method is performed.

The storage 11 may store a computer program (which may be abbreviated as a program in the present disclosure) for causing the air conditioner 10 to execute the refrigerant leak detection method. Furthermore, the storage 11 may include a non-transitory computer-readable storage medium in which a computer program is stored.

### <Communicator 12>

The communicator 12 can also communicate with the server 50, the terminal device 60 of the user, or the like, and can also transmit and receive IP packets, for example. As described above, the controller 13 may cooperate with the server 50 and/or the terminal device 60 via the communicator 12. The communicator 12 may perform communication between the air conditioner 10 and the terminal device 60, the server 50, or an external information source 90 according to standards such as infrared rays and Bluetooth (registered trademark), such as Wi-Fi (registered trademark), IEEE802.2, IEEE802.3, 3G, LTE, an intranet, an extranet, a LAN, ISDN, VAN, a CATV communication network, a virtual private network, a telephone line network, a mobile communication network, and a satellite communication network, and transmit and receive data.

### <Controller 13>

The controller 13 is a controller that controls at least some functions of the air conditioner 10. The controller 13 includes a general-purpose processor such as a CPU, an MPU, an MCU, an FPGA, a DSP, or an ASIC that implements a predetermined function by executing a program. The controller 13 can implement various kinds of control in the air conditioner 10 by calling and executing control programs stored in the storage 11. In addition, the controller 13 can read/write data stored in the storage 11 in cooperation with the storage 11. The controller 13 is not limited to one that implements a predetermined function by cooperation of hardware and software, and may be a hardware circuit designed exclusively for implementing a predetermined function.

The controller 13 can receive various commands and setting values from the user from the terminal device 60 via the communicator 12. The controller 13 controls each component of the air conditioner 10 so as to exert the air conditioning function of the air conditioner 10 based on these setting values, detection values (for example, indoor humidity and outdoor humidity) received from various sensors, and the like. In addition, the controller 13 detects rapid refrigerant leak in the air conditioner 10 based on the refrigerant leak detection method to be described later.

### <Presentation device 14>

The presentation device 14 presents information by at least one of a numerical value, a character, an image, and a speech. The presentation device 14 may include a display for presenting a graphical user interface (GUI), and a speaker or a buzzer for presenting a speech. The air conditioner 10 can output an alarm or a notification via the presentation device 14 in response to detection of refrigerant leak, for example. Note that the air conditioner 10 does not have to include the presentation device 14 in a case where an alarm or a notification is output via the terminal device 60 or in a case where an alarm or a notification is output to the server 50.

### <Pressure Sensor 15>

The air conditioner 10 includes at least one pressure sensor 15. The pressure sensor 15 is a sensor for acquiring pressure information related to a pressure of the refrigerant in the refrigerant pipe 21. For example, the pressure sensor 15 can detect an absolute pressure, a gauge pressure, or change in pressure in the refrigerant pipe 21, and output the detected content as pressure information.

The pressure sensor 15 may be arranged in the refrigerant pipe 21 or outside the refrigerant pipe 21, or may be partially arranged in the refrigerant pipe 21. The pressure sensor 15 may be arranged in the indoor unit 30 or may be arranged in the outdoor unit 40. A detection result of the pressure sensor 15 varies depending on a place where the pressure sensor is arranged in the refrigerant pipe 21. Basically, the pressure sensor 15 is arranged to acquire pressure information related to a pressure of the refrigerant in a gas phase (that is, a refrigerant gas) in the refrigerant pipe 21. Further, a plurality of pressure sensors 15 may be provided at a plurality of positions on the refrigerant pipe 21 to detect leak more quickly or accurately.

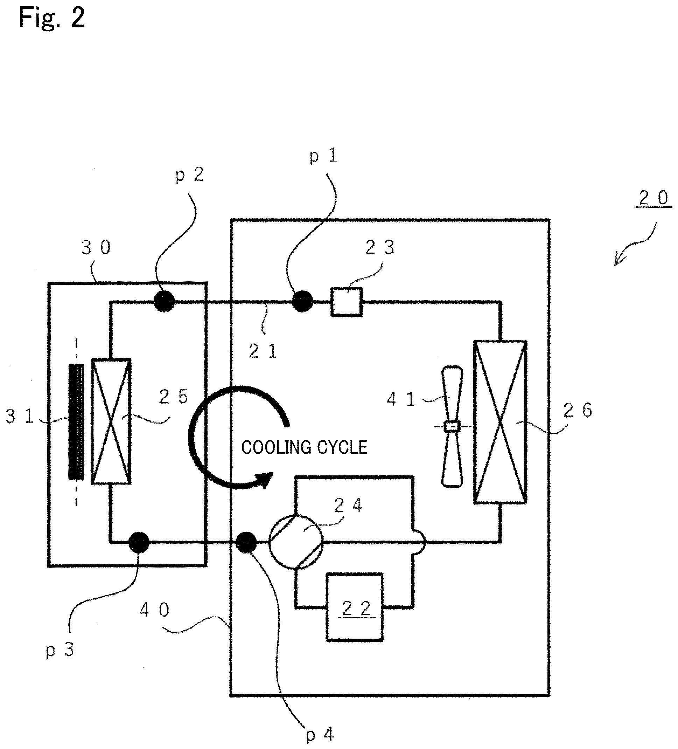

Fig. 2 is a schematic view of the refrigeration cycle 20 according to the first embodiment. In Fig. 2, components related to the refrigeration cycle 20 in the air conditioner 10 are illustrated, and black circles indicate exemplary arrangement positions (arrangement positions p1 to p4) of the pressure sensor 15.

In one example, the pressure sensor 15 is arranged in the outdoor unit 40, and can be arranged at, for example, the arrangement position p1 illustrated in Fig. 2. In a case where the pressure sensor 15 is arranged in the outdoor unit 40, the pressure sensor 15 is easily attached at the time of manufacturing the air conditioner 10, or the like.

In one example, the pressure sensor 15 is arranged at a portion of the refrigerant pipe 21 located in the indoor unit 30. For example, the pressure sensor 15 can be arranged at the arrangement position p2 or the arrangement position p3 illustrated in Fig. 2. In general, even if leak occurs outdoors, a risk is relatively low because the leaking refrigerant is diluted in the atmosphere. Thus, there are many cases where it is desired to detect indoor leak with a relatively high risk. In a case where the pressure sensor 15 is arranged in the indoor unit 30, a location where the pressure information is acquired is close to the leak location (that is, the indoor space) to be detected, so that sensitivity of leak detection is relatively high.

In one example, the pressure sensor 15 is provided in a portion of the refrigerant pipe 21 located in the indoor unit 30 and between the indoor heat exchanger 25 and the compressor 22. For example, the pressure sensor 15 can be arranged at the arrangement position p3 illustrated in Fig. 2. The pressure sensor 15 at the arrangement position p3 can acquire pressure information of the refrigerant in the gas phase regardless of whether the refrigeration cycle 20 performs the cooling cycle or the heating cycle. As another example, the pressure sensor 15 is provided at a portion of the refrigerant pipe 21 located in the outdoor unit 40 and between the indoor heat exchanger 25 and the compressor 22. Although this arrangement position is in the outdoor unit 40, pressure information of the refrigerant in the gas phase can be acquired.

In one example, the pressure sensor 15 is arranged in the vicinity of the compressor 22 in the refrigerant pipe 21. For example, the pressure sensor 15 can be arranged at the arrangement position p4 illustrated in Fig. 2. Although there is a difference in pressure and temperature between an upstream side and a downstream side of the compressor 22 even if the cooling cycle or the heating cycle is performed, basically, the refrigerant is in a gaseous form in the vicinity of the compressor 22. Thus, the pressure sensor 15 arranged in the vicinity of the compressor 22 can acquire pressure information of the refrigerant in the gas phase.

The air conditioner 10 may further include a sensor for acquiring various types of information from the outside of the air conditioner 10 in order to exhibit its function. For example, the air conditioner 10 may include an indoor temperature sensor that detects the temperature of indoor air sucked into the indoor unit 30 from the control space, and an outside air temperature sensor that detects the outside air temperature of the control space.

These sensors including the pressure sensor 15 can acquire information for performing refrigerant leak detection and air conditioning functions. The information detected by the sensors is input to and stored in the storage 11, and then used by the controller 13 or transmitted to the terminal device 60 or the server 50.

### <Indoor Unit 30 and Outdoor Unit 40>

In the example of Fig. 1, the air conditioner 10 includes the indoor unit 30 and the outdoor unit 40. The indoor unit 30 includes an indoor fan 31, and the outdoor unit 40 includes an outdoor fan 41. As an example, the storage 11, the communicator 12, the controller 13, and the indoor heat exchanger 25 can be arranged in the casing of the indoor unit 30, and the compressor 22, the expansion valve 23, the four-way valve 24, and the outdoor heat exchanger 26 can be arranged in the casing of the outdoor unit 40.

### <Server 50>

The server 50 may be, for example, a management server of a manufacturer of the air conditioner 10 for managing the at least one air conditioner 10 or collecting data. Alternatively, the server 50 may be an application server. The server 50 can acquire a detection result related to refrigerant leak from the air conditioner 10 and information detected by at least one sensor of the air conditioner 10 or transfer the detection result and the information to the terminal device 60 via the Internet. In addition, the server 50 can take a countermeasure in cooperation with the air conditioner 10 and/or the terminal device 60 in response to the leak detection.

### <Terminal Device 60>

The terminal device 60 is a device related to the air conditioner 10. The terminal device 60 may be, for example, a controller of the air conditioner 10, or may be a controller capable of managing and controlling a plurality of types of home appliances. Furthermore, the terminal device 60 may be an information terminal capable of performing data communication with the air conditioner 10, for example, a smartphone, a cell phone, a mobile phone, a tablet, a wearable device, a computer, or the like, in which a dedicated related application 61 is incorporated.

The controller 13 or the server 50 of the air conditioner 10 can acquire settings or commands input by the user via the terminal device 60. The terminal device 60 can acquire a detection result related to refrigerant leak and information detected by at least one sensor of the air conditioner 10 from the air conditioner 10 or the server 50 via the Internet. In addition, the terminal device 60 can take a countermeasure in cooperation with the air conditioner 10 and/or the server 50 in response to the leak detection. For example, in a case where the terminal device 60 includes a presentation device including a display, a speaker, and the like, the terminal device 60 can notify the user of the rapid leak via the presentation device in response to detection of the rapid leak of the refrigerant.

### <Refrigerant Leak Detection Method>

The air conditioner 10 executes the refrigerant leak detection method. More specifically, the controller 13 of the air conditioner 10 cooperates with the storage 11 and the pressure sensor 15 to execute the refrigerant leak detection method. According to the refrigerant leak detection method, rapid refrigerant leak can be detected. In addition, an appropriate countermeasure can be taken in response to detection of rapid refrigerant leak.

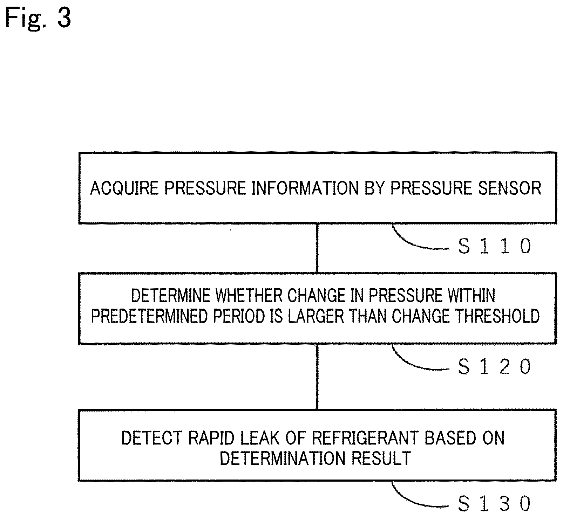

Fig. 3 is a flowchart of the refrigerant leak detection method according to the first embodiment. The refrigerant leak detection method indicated in Fig. 3 includes steps S110 to S130. In one example, the controller 13 of the air conditioner 10 may periodically execute the refrigerant leak detection method. The controller 13 may execute the refrigerant leak detection method regardless of whether or not the air conditioner 10 is in operation.

In the refrigerant leak detection method, the controller 13 of the air conditioner 10 acquires pressure information related to the pressure of the refrigerant in the refrigerant pipe 21 by the pressure sensor 15 (step S110). A period with which the controller 13 acquires the pressure information by the pressure sensor 15 may be, for example, 3 minutes, 60 seconds, 30 seconds, 15 seconds, 10 seconds, 5 seconds, 3 seconds, 1 second, or 1 second or less.

Next, the controller 13 determines, based on the pressure information acquired in step S110, whether or not change in pressure within a predetermined period is larger than a change threshold (step S120). The controller 13 detects rapid refrigerant leak based on the determination result (step S130). The predetermined period in step S120 may be equal to or longer than the acquisition period of the pressure information. For example, the predetermined period may be 5 minutes, 3 minutes, 60 seconds, 30 seconds or less, 15 seconds, 10 seconds, 5 seconds, 3 seconds, 1 second, or 1 second or less. The predetermined period may be an execution period of the refrigerant leak detection method. In addition, the predetermined period may be 30 seconds or less in order to respond quickly.

More specifically, the controller 13 determines, based on the pressure information, how much the pressure of the refrigerant in the refrigerant pipe 21 has increased or decreased over the predetermined period. Then, in a case where the pressure decreases, the controller 13 determines whether or not the decrease amount is larger than the change threshold. In other words, the change threshold is a threshold for the decrease amount of the pressure of the refrigerant per unit time. In a case where the pressure of the refrigerant decreases more than the change threshold within the predetermined period, the controller 13 determines that the refrigerant is rapidly leaking and detects the rapid leak of the refrigerant. On the other hand, in a case where it is determined that the pressure of the refrigerant has increased during the predetermined period or has decreased by a change amount equal to or less than the change threshold, the controller 13 determines that the refrigerant is not rapidly leaking.

In one example, the change threshold is set in consideration of a possibility of ignition due to refrigerant leak. As described above, in a case where the refrigerant leakage speed is relatively high, a relatively large combustible region is easily formed in a short period as compared with a case where the refrigerant leakage speed is relatively low.

The change threshold may be set based on experimental results (simulation results) regarding refrigerant leak and ignition. For example, the change threshold is set based on experimental results regarding the refrigerant leakage speed and the possibility of ignition. As an example, the change threshold when the refrigerant is R290 is set according to a leakage speed of equal to or higher than 10 kg/h, equal to or higher than 7.5 kg/h, or 5 kg/h.

In addition to the leakage speed, several factors affecting the possibility of ignition are conceivable. For example, a self-ignition temperature and a lower flammability limit (LFL) of the refrigerant vary depending on the type of the refrigerant, and the possibility of ignition in general use varies. LFL is a minimum concentration of the refrigerant that can propagate a flame in a state where the refrigerant and air are uniformly mixed. In a case where the LFL is relatively low, the possibility of ignition is relatively high because a flammable region is likely to be generated even if the leakage speed is relatively low. Thus, the change threshold can be set further based on the type of the refrigerant.

In addition, an internal volume of the refrigerant pipe 21, a refrigerant amount in the air conditioner 10, and the like, can affect the leakage speed, and thus can be considered in setting the change threshold. In one example, the change threshold may be set based on at least one of the type of the refrigerant, the circuit internal volume of the refrigerant pipe 21, and the refrigerant amount in the air conditioner 10. As an example, the change threshold is set to an amount of pressure drop per unit time corresponding to a specific leakage speed (for example, 7.5 kg/h).

In one example, the controller 13 can specify the type of the refrigerant to be used in the air conditioner 10, the circuit internal volume of the refrigerant pipe 21, the refrigerant amount, and the like, based on a model or identification information (hereinafter, abbreviated as identification information, or the like) of the air conditioner 10. In this case, the controller 13 can specify the identification information, or the like, of the air conditioner 10 and acquire the change threshold associated with the identification information, or the like, of the air conditioner 10. In one example, the change threshold associated with the air conditioner 10 is stored in the storage 11, and the controller 13 acquires the change threshold by reading the change threshold from the storage 11. In another example, the controller 13 acquires the change threshold from the server 50 by inquiring the server 50 via the communicator 12 using the identification information, or the like, of the air conditioner 10. Then, the controller 13 executes the refrigerant leak detection method using the change threshold corresponding to the identification information, or the like.

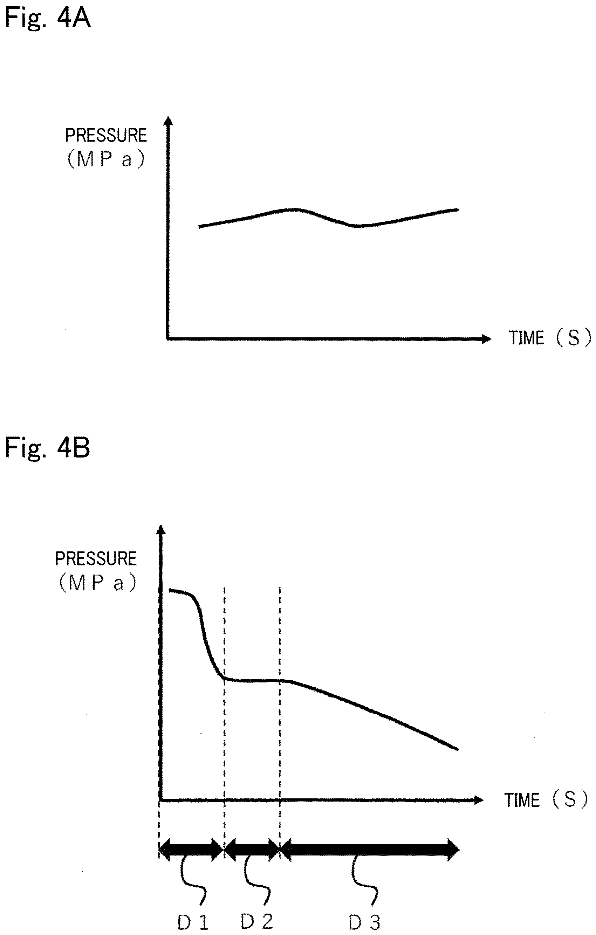

Hereinafter, with reference to Figs. 4A and 4B, change in pressure of the refrigerant when a rapid leak occurs will be described. Fig. 4A is a schematic view of change in pressure of the refrigerant at a normal time, and Fig. 4B is a schematic view of change in pressure of the refrigerant when the rapid leak occurs.

A saturation temperature of the refrigerant changes according to the ambient temperature, and thus, the pressure of the refrigerant gas slightly changes with changes in the indoor temperature and the outside air temperature. Thus, as illustrated in Fig. 4A, the pressure of the refrigerant gas gradually increases or decreases within a certain range at the normal time of operation stop. For example, in a case where the refrigerant is R-290, the pressure changes slowly within a range of approximately 1.2 MPa to 0.5 MPa at a normal time.

On the other hand, it has been found from experiments that the pressure of the refrigerant gas rapidly decreases when rapid refrigerant leak occurs. During a period D1 illustrated in Fig. 4B, the pressure of the refrigerant gas rapidly decreases in a short period in response to occurrence of the rapid leak of the refrigerant. Thereafter, over a period D2, the refrigerant in a liquid phase evaporates and the refrigerant gas is replenished, and the pressure is balanced. Then, during a period D3, the temperature of the refrigerant decreases due to latent heat of vaporization, and the pressure of the refrigerant gas gradually further decreases.

Thus, the refrigerant leak detection method and the air conditioner 10 described above can detect the rapid refrigerant leak by detecting the rapid decrease in the pressure of the refrigerant in the refrigerant pipe 21.

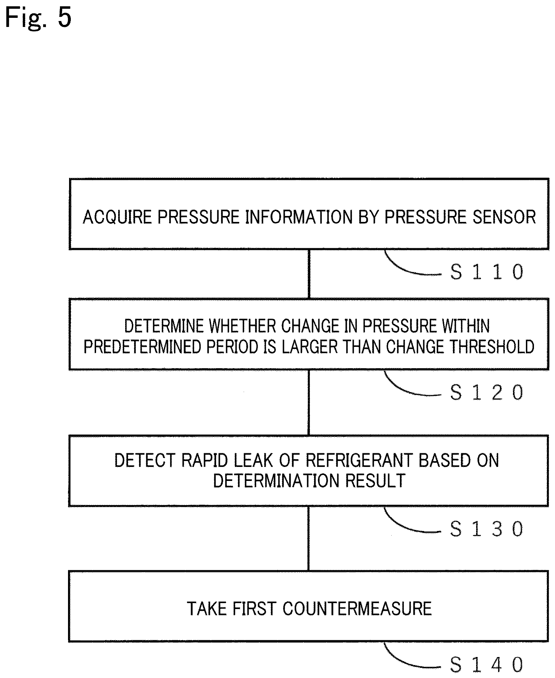

Fig. 5 is a flowchart of another example of the refrigerant leak detection method according to the first embodiment. The refrigerant leak detection method indicated in Fig. 5 includes steps S110 to S140. Steps S110 to S130 in Fig. 5 are the same as the content of steps S110 to S130 in Fig. 3, and details are omitted herein.

In the refrigerant leak detection method indicated in Fig. 5, after detecting the rapid refrigerant leak, the controller 13 further performs a first countermeasure in response to the detection of the rapid leak (step S140). The air conditioner 10 may execute the first countermeasure alone, or may execute the first countermeasure in cooperation with the server 50 and/or the terminal device 60.

In one example, the first countermeasure includes outputting a notification or alarm representing at least one of detection of a rapid leak and representing an evacuation suggestion. The controller 13 may output a notification or an alarm via the presentation device 14 or the terminal device 60 of the air conditioner 10 so as to notify the user of the rapid leak by the notification or the alarm. In one example, the controller 13 outputs a speech notifying that "there is refrigerant leak. Please evacuate immediately." via the speaker of the presentation device 14. In one example, the controller 13 causes the terminal device 60 to output a notification indicating the detection of the rapid leak via the communicator 12, thereby notifying a user who is not in a control range of the air conditioner 10. In one example, the controller 13 transmits a notification to the server 50 via the communicator 12, and the server 50 transfers the received notification to a management company of the air conditioner 10 or a manager of the building in which the air conditioner 10 is installed.

In one embodiment, the air conditioner 10 includes at least one cutoff valve 17 provided in the refrigerant pipe 21. In this example, the first countermeasure includes operating the cutoff valve 17 to cut off flow of the refrigerant in the refrigerant pipe 21.

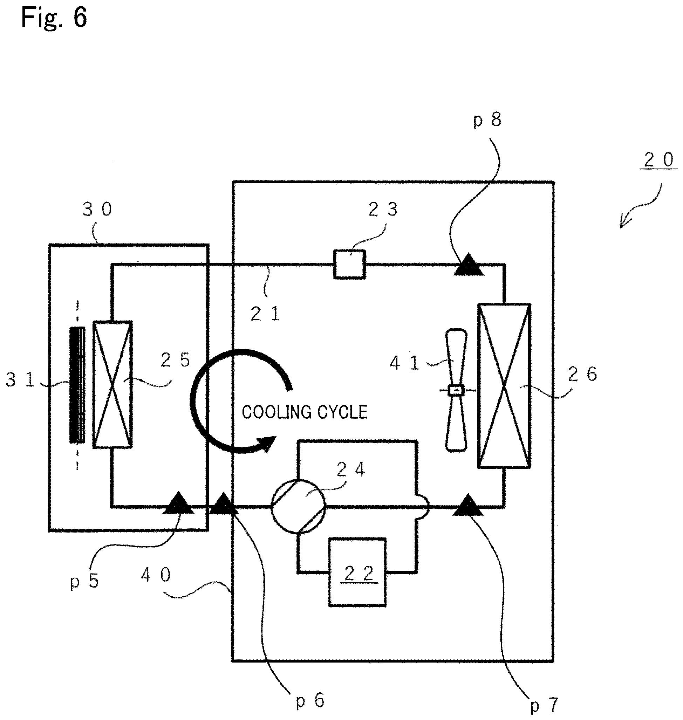

Fig. 6 is a schematic view of the refrigeration cycle 20 according to the first embodiment. Fig. 6 illustrates components related to the refrigeration cycle 20 in the air conditioner 10, and black triangles indicate examples of the arrangement position of the cutoff valve 17 (arrangement positions p5 to p7). The cutoff valve 17 cuts off the flow of the refrigerant in the refrigerant pipe 21. For example, the cutoff valve 17 may cut off the refrigerant to the indoor unit 30 or the outdoor unit 40, thereby cutting off the overall flow of the refrigerant.

As illustrated in Fig. 6, the cutoff valve 17 may be arranged in the indoor unit 30 (arrangement position p5), may be arranged in the outdoor unit 40 (arrangement position p7, arrangement position p8), or may be arranged between the indoor unit 30 and the outdoor unit 40 (arrangement position p6). Further, the cutoff valve 17 may be arranged in the vicinity of the compressor 22 (for example, arrangement position p6 and arrangement position p7). Still further, the cutoff valve 17 may be arranged outside the casing of the indoor unit 30 or the outdoor unit 40 so that an inspector can perform inspection when leak, or the like, occurs.

In one example, the first countermeasure includes operating the indoor fan 31 of the indoor unit 30. The controller 13 operates the indoor fan 31 so as not to form a flammable region due to the leaking refrigerant gas, stirs the refrigerant gas, and disperses the refrigerant gas into the indoor air. In other words, the controller 13 operates the indoor fan 31 to reduce a concentration of the leaking refrigerant and prevent ignition.

Note that the controller 13 may execute a plurality of first countermeasures in response to the detection of the rapid leak. In one example, the controller 13 selects an appropriate first countermeasure based on a refrigerant leak state or a refrigerant decrease amount. For example, the storage 11 stores a comparison table of the leak state or the refrigerant decrease amount and the first countermeasure to be taken. The controller 13 determines the first countermeasure to be taken by collating the comparison table with the determined leak state or the detected refrigerant decrease amount.

According to the refrigerant leak detection method and the air conditioner 10 described above, a rapid leak of a flammable refrigerant can be detected. In addition, it is possible to take the first countermeasure suitable for the detection of the rapid leak, so that it is possible to enhance safety regarding use of the flammable refrigerant.

As described above, the controller 13 of the air conditioner 10 completes the detection processing for rapid refrigerant leak. The controller 13 may periodically repeat steps S110 to S130.

In one example, the air conditioner 10 includes a program to be used to execute the refrigerant leak detection method as described above. The program causes the controller 13 of the air conditioner 10 to execute the refrigerant leak detection method.

In one example, the air conditioner 10 includes a non-transitory computer-readable storage medium in which a computer program is stored. The refrigerant leak detection method of the present disclosure is implemented when the computer program is executed by a processor. The storage medium may be the same as the storage 11 of the air conditioner 10, may be included in the storage 11, or may be a component different from the storage 11.

### <<Second Embodiment>>

### <Detection of Minute Refrigerant Leak>

In a second embodiment, the refrigerant leak detection method and the air conditioner 10 detect leak using the pressure sensor 15 and the gas sensor 16 in combination. In the second embodiment, the refrigerant leak detection method and the air conditioner 10 can further detect minute refrigerant leak (also referred to as slow leak).

The minute leak (also known as fuzzy leak) of the refrigerant in the present disclosure refers to leak that proceeds at a leakage speed equal to or less than a predetermined value. For example, refrigerant leak proceeding at a leakage speed of less than 7.5 kg/h is determined to be a minute leak.

In the second embodiment, the air conditioner 10 further includes at least one gas sensor 16 (refrigerant sensor) (Fig. 1). The gas sensor 16 is a sensor for detecting a refrigerant flowing through the refrigerant pipe 21, and may be of a semiconductor type, a catalytic combustion type, an electrochemical type, an optical type including a non-dispersive infrared (NDIR) type, or the like. Generally, the gas sensor 16 is arranged outside the refrigerant pipe 21, and may be arranged in the indoor unit 30 or the outdoor unit 40. In a case where it is desired to detect indoor leak having a relatively high risk, the gas sensor 16 is arranged in the indoor unit 30.

As described above, the gas sensor 16 can detect the presence of the leaking refrigerant, but cannot detect the refrigerant leakage speed. Thus, even if the gas sensor 16 detects the refrigerant, it is not possible to determine which of a rapid leak or a minute leak occurs. Here, the refrigerant leak detection method and the air conditioner 10 determine whether a rapid leak or a minute leak occurs by combining the pressure sensor 15 and the gas sensor 16.

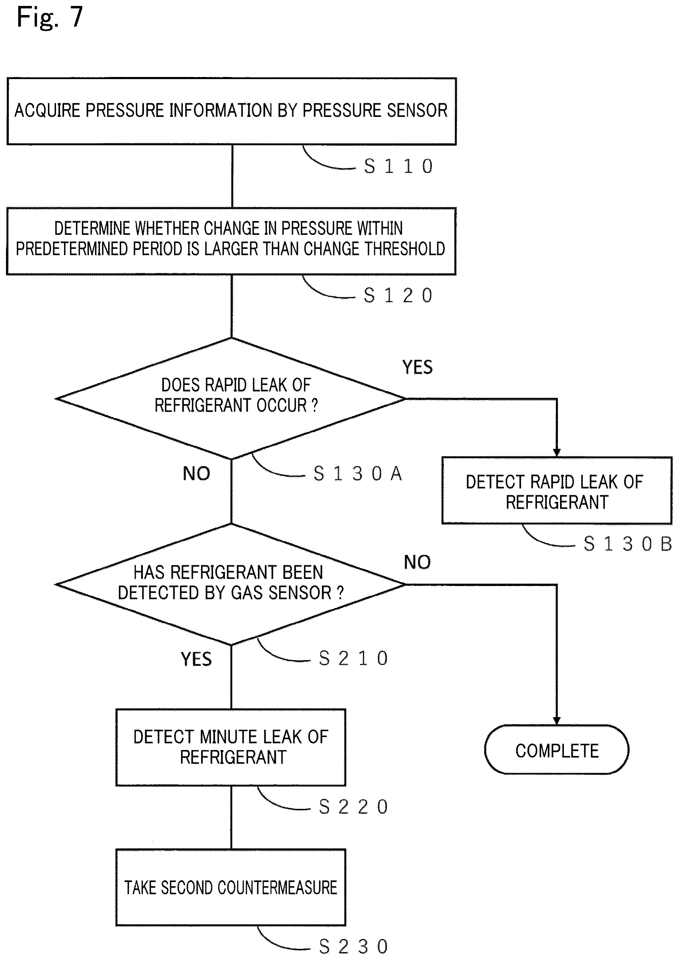

Fig. 7 is a flowchart indicating an example of a refrigerant leak detection method according to the second embodiment. The refrigerant leak detection method indicated in Fig. 7 includes step S110, step S120, step S130A, step S130B, and step S210 to step S230. Step S110 and step S120 in Fig. 7 are the same as the content of step S110 and step S120 in Fig. 3, and details are omitted herein. In the second embodiment, step S130 includes step S130A and step S130B in Fig. 7.

In Fig. 7, the controller 13 acquires pressure information and determines whether or not a decrease amount of the pressure of the refrigerant is larger than a change threshold (step S110, step S120). Then, the controller 13 determines whether or not the refrigerant is rapidly leaking based on the determination result of step S120 (step S130A). If the determination result indicates that the decrease amount of the pressure is larger than the change threshold, the controller 13 detects rapid refrigerant leak (step S130B).

On the other hand, in a case where the determination result indicates that the decrease amount of the pressure is less than the change threshold, that is, in a case where the pressure sensor 15 does not detect a rapid leak, the controller 13 further determines whether the gas sensor 16 detects a refrigerant (step S210).

In a case where the gas sensor 16 detects the refrigerant, the controller 13 detects a minute leak of the refrigerant (step S220). In this case, although the refrigerant leaks from the refrigerant pipe 21 located in the indoor unit 30, the leakage speed is lower than the speed at which ignition can occur, and thus, the possibility of ignition is low, and the state is relatively safe.

If the minute leak of the refrigerant is detected, the controller 13 performs a second countermeasure in response to the detection of the minute leak (step S230). Compared to a rapid leak, a minute leak is in a relatively safe state, and thus, the second countermeasure does not have to include outputting an alarm indicating immediate evacuation or operating the cutoff valve 17. Alternatively, the second countermeasure may include outputting at least one of a notification representing detection of the minute leak, a notification suggesting ventilation, and a notification suggesting repair of the air conditioner 10. Further, the second countermeasure may include operating the indoor fan 31.

On the other hand, in a case where neither the rapid leak nor the refrigerant is detected, the controller 13 completes the refrigerant leak detection processing. If the next processing cycle of the refrigerant leak detection starts, the controller 13 also executes the processing from step S110.

Note that in a case where it is determined that both the rapid leak and the refrigerant have been detected, the controller 13 may execute step S140 (Fig. 5) described above.

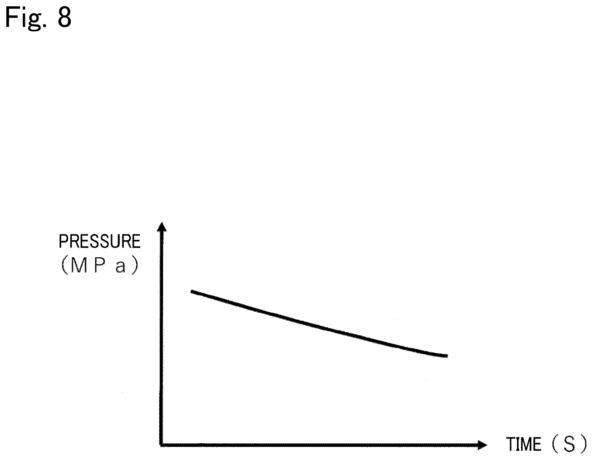

Fig. 8 is a schematic view of change in pressure of the refrigerant when a minute leak occurs. In a case where the minute leak of the refrigerant occurs, the temperature of the refrigerant decreases due to latent heat of vaporization, and the pressure of the refrigerant gas gradually decreases. As can be seen from comparison between Fig. 4B and Fig. 8, the pressure drop at the time of occurrence of the minute leak is slower than the pressure drop at the time of occurrence of the rapid leak, and the leakage speed at the time of occurrence of the minute leak is relatively slow.

As described above, by using the pressure sensor 15 and the gas sensor 16 in combination, the rapid leak and the minute leak of the refrigerant can be detected. In addition, the rapid leak and the minute leak can be detected, and thus, different countermeasures can be taken according to each case.

### <<Third Embodiment>>

### <Detection of Outdoor Leak of Refrigerant>

In a third embodiment, the refrigerant leak detection method and the air conditioner 10 detect leak using the pressure sensor 15 and the gas sensor 16 in combination. In the third embodiment, the refrigerant leak detection method and the air conditioner 10 can further detect outdoor leak of the refrigerant. The outdoor leak of the refrigerant in the present disclosure refers to leak of the refrigerant at the outdoor unit 40 or between the indoor unit 30 and the outdoor unit 40.

In the third embodiment, as in the second embodiment, the air conditioner 10 further includes at least one gas sensor 16 (Fig. 1).

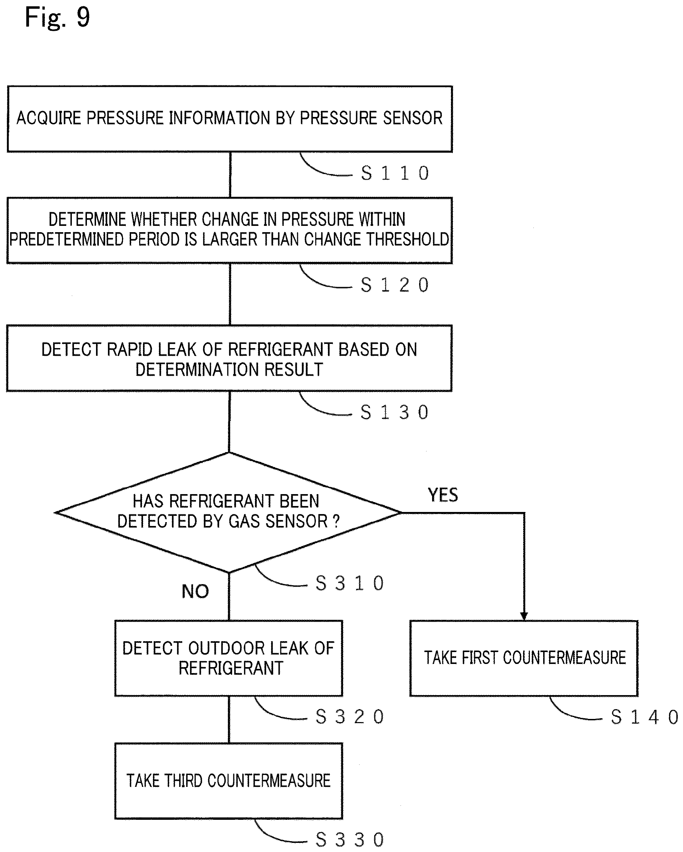

Fig. 9 is a flowchart indicating an example of a refrigerant leak detection method according to the third embodiment. The refrigerant leak detection method indicated in Fig. 9 includes steps S110 to S140 and steps S310 to S330. Steps S110 to S140 in Fig. 9 are the same as the content of steps S110 to S140 in Fig. 5, and details are omitted herein.

In the example indicated in Fig. 9, the gas sensor 16 is arranged in the indoor unit 30. The controller 13 can determine whether or not refrigerant leak occurs from the refrigerant pipe 21 located in the indoor unit 30 by the gas sensor 16. In the example indicated in Fig. 9, the controller 13 detects a rapid leak by the pressure sensor 15, and further determines whether or not the refrigerant has been detected by the gas sensor 16 (step S310). In a case where the rapid leak is detected and the refrigerant is not detected by the gas sensor 16 arranged in the indoor unit 30, the controller 13 detects outdoor leak of the refrigerant (step S320).

In this case, although the refrigerant is rapidly leaking, the leakage location is outdoors. Air flow is more likely to occur outdoors than indoors, and the leaking refrigerant is diluted with the atmosphere. Thus, the possibility of ignition is low, and the refrigerant is in a relatively safe state.

If the outdoor leak of the refrigerant is detected, the controller 13 performs a third countermeasure in response to the detection of the outdoor leak (step S330). The outdoor leak is relatively safe compared to the indoor rapid leak, and thus, the third countermeasure does not have to include immediately outputting an alarm indicating evacuation or operating the cutoff valve 17. Alternatively, the third countermeasure may include outputting a notification representing detection of outdoor leak or a notification suggesting repair the air conditioner 10. Further, the third countermeasure may include operating the outdoor fan 41.

On the other hand, in a case where the rapid leak is detected and the refrigerant is detected by the gas sensor 16 arranged in the indoor unit 30, it can be seen that the rapid leak occurs indoors. In this case, the controller 13 executes step S140 described above and performs the first countermeasure.

In another example, the gas sensor 16 is arranged in the outdoor unit 40 or between the indoor unit 30 and the outdoor unit 40. In this example, in a case where the rapid leak is detected and the refrigerant is detected by the gas sensor 16 arranged in the outdoor unit 40, the controller 13 performs the third countermeasure. In a case where the rapid leak is detected and the refrigerant is not detected by the gas sensor 16 arranged in the outdoor unit 40, the controller 13 performs the first countermeasure.

As described above, by using the pressure sensor 15 and the gas sensor 16 in combination, it is possible to detect a rapid leak and an outdoor leak of the refrigerant. In addition, different countermeasures can be taken according to the rapid leak and the outdoor leak.

It is possible to combine detection of three types of leakage states including the rapid leak, the minute leak, and the outdoor leak described above, and the first to third countermeasures. For example, the storage 11 stores a comparison table of a plurality of leakage states and corresponding countermeasures corresponding to the respective leakage states. The controller 13 determines a countermeasure to be taken by collating the comparison table according to the determined leakage state.

Note that the present disclosure also provides a computer program and a storage medium for a refrigerant leak detection method for the air conditioner 10, the computer program and the storage medium corresponding to the second and third embodiments.

### <<Fourth Embodiment>>

### <Detection Device and Refrigerant Leak Detection Method Thereof>

In a fourth embodiment, the rapid leak of the flammable refrigerant in the air conditioner 10 can be detected by a detection device different from the air conditioner 10. For example, the server 50 or the terminal device 60 that can acquire the pressure information from the air conditioner 10 can detect the rapid leak based on the acquired pressure information.

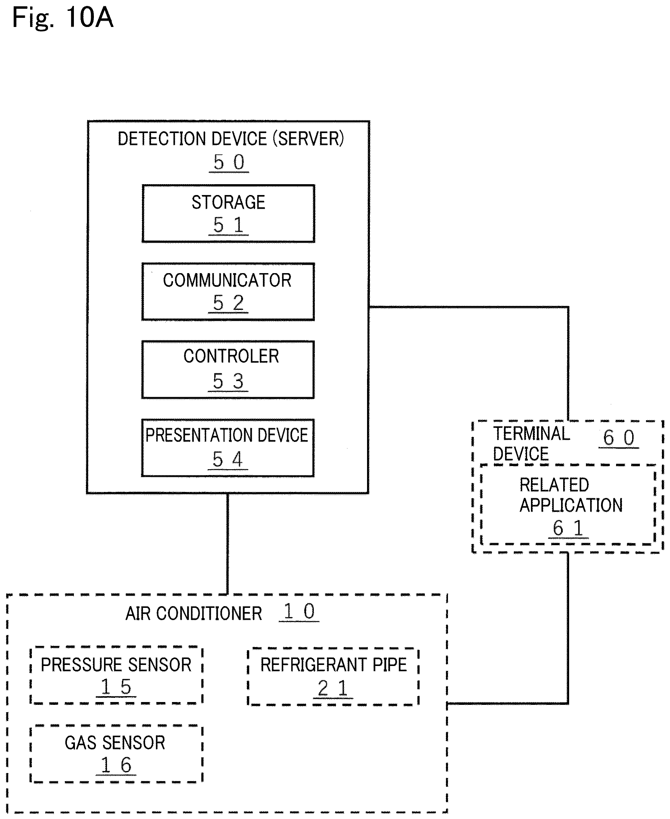

Fig. 10A is a block diagram illustrating an example of a schematic configuration of the detection device according to the fourth embodiment. In the example illustrated in Fig. 10A, the server 50 operates as the detection device. The server 50 illustrated in Fig. 10A includes a storage 51, a communicator 52, a controller 53, and a presentation device 54. The server 50 is communicably connectable to the air conditioner 10 via the communicator 52. In the example illustrated in Fig. 10A, the refrigerant leak detection method is executed not by the controller 13 of the air conditioner 10 but by the controller 53 of the server 50 as the detection device. The controller 53 of the server 50 does not directly acquire the pressure information from the pressure sensor 15 of the air conditioner 10, but indirectly acquires the pressure information from the air conditioner 10 via the storage 51 or the communicator 52.

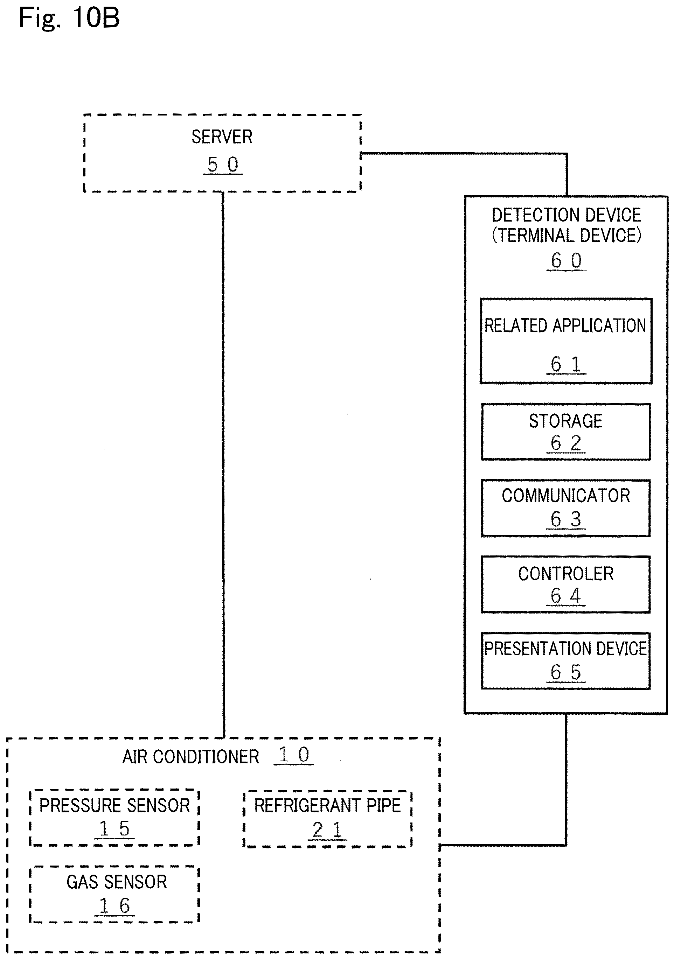

Fig. 10B is a block diagram illustrating another example of the schematic configuration of the detection device according to the fourth embodiment. In the example illustrated in Fig. 10B, the terminal device 60 operates as the detection device. The terminal device 60 illustrated in Fig. 10B includes a related application 61, a storage 62, a communicator 63, a controller 64, and a presentation device 65. The terminal device 60 is communicably connectable to the air conditioner 10 via the communicator 63. In the example illustrated in Fig. 10B, the refrigerant leak detection method is executed not by the controller 13 of the air conditioner 10 but by the controller 64 of the terminal device 60 as the detection device. Further, the controller 64 of the terminal device 60 indirectly acquires the pressure information from the air conditioner 10 or the server 50 via the storage 62 or the communicator 63 instead of directly acquiring the pressure information from the pressure sensor 15 of the air conditioner 10.

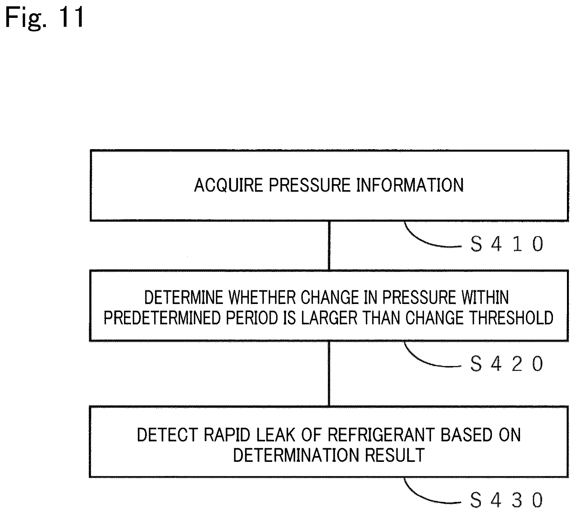

Fig. 11 is a flowchart indicating an example of the refrigerant leak detection method according to the fourth embodiment. The refrigerant leak detection method indicated in Fig. 11 is executed by the detection device, and includes steps S410 to S430.

In the example indicated in Fig. 11, the controller (for example, the controller 53 or the controller 64) of the detection device acquires pressure information by the pressure sensor 15 arranged in the air conditioner 10 via the communicator (for example, the communicator 52 or the communicator 63) (step S410). The controller of the detection device determines, based on the acquired pressure information, whether or not change in pressure within the predetermined period is larger than the change threshold (step S420), and detects the rapid refrigerant leak based on the determination result (step S430). The processing in steps S420 and S430 is substantially the same as the processing content in steps S120 and S130 in Fig. 3, and details are omitted herein.

As a result, the detection device communicably connectable to the air conditioner 10 can acquire the pressure information related to the pressure of the refrigerant in the refrigerant pipe 21 of the air conditioner 10 from the air conditioner 10 via the Internet, or the like. According to such a refrigerant leak detection method and detection device, it is possible to detect a rapid leak of a flammable refrigerant, and to take the first countermeasure appropriate for the detection of the rapid leak. In addition, the detection device can further execute the detection methods described in the second and third embodiments to detect a minute leak or an outdoor leak, and can take appropriate countermeasures according to different leakage states.

In one example, the server 50 or the terminal device 60 as the detection device includes a program to be used to execute the refrigerant leak detection method indicated in Fig. 11. The program causes the controller 53 of the server 50 or the controller 64 of the terminal device 60 to execute the refrigerant leak detection method.

In one example, the server 50 or the terminal device 60 as the detection device has a non-transitory computer-readable storage medium in which a computer program is stored. The refrigerant leak detection method of the present disclosure is implemented when the computer program is executed by a processor. The storage medium may be the same as the storage 51 of the server 50 or the storage 62 of the terminal device 60, may be included in the storage 51 or the storage 62, or may be a component different from the storage 51 or the storage 62.

### (Other Embodiments)

### (Supplements)

The following techniques are disclosed by the above description of the embodiments.

(Technology 1) An air conditioner using a flammable refrigerant, the air conditioner comprising: a refrigerant pipe through which a refrigerant flows; a pressure sensor that is provided in the refrigerant pipe and acquires pressure information related to a pressure of the refrigerant in the refrigerant pipe; and a controller that acquires the pressure information by the pressure sensor, determines, based on the pressure information, whether or not change in pressure within a predetermined period is larger than a change threshold, and detects a rapid leak of the refrigerant based on a determination result.

According to such an air conditioner, it is possible to detect the rapid leak of a flammable refrigerant from the refrigerant pipe of the air conditioner.

(Technology 2) The air conditioner according to (Technology 1), wherein the change threshold is set based on at least one of a type of the refrigerant, an internal volume of the refrigerant pipe, and a refrigerant amount in the air conditioner.

According to such a change threshold, the rapid leak of the refrigerant can be detected more accurately.

(Technology 3) The air conditioner according to (Technology 1) or (Technology 2), wherein the change threshold is set in accordance with a leakage speed equal to or higher than 7.5 kg/h.

According to such a change threshold, the rapid leak of the refrigerant can be detected more accurately.

(Technology 4) The air conditioner according to any of the preceding Technologies, wherein the predetermined period is equal to or less than 30 seconds.

According to such a predetermined period, rapid leak of the refrigerant can be immediately detected.

(Technology 5) The air conditioner according to any of the preceding Technologies, wherein the controller performs a first countermeasure in response to detection of the rapid leak, and the first countermeasure includes outputting a notification or an alarm representing at least one of detection of the rapid leak and representing an evacuation suggestion.

By this means, it is possible to take an appropriate countermeasure in response to the rapid leak of the refrigerant.

(Technology 6) The air conditioner according to any of the preceding Technologies, further comprising a cutoff valve provided in the refrigerant pipe, wherein the controller performs a first countermeasure in response to detection of the rapid leak, and the first countermeasure includes operating the cutoff valve to cut off flow of the refrigerant in the refrigerant pipe.

By this means, it is possible to take an appropriate countermeasure in response to the rapid leak of the refrigerant.

(Technology 7) The air conditioner according to any of the preceding Technologies, wherein the air conditioner includes an indoor fan, the controller performs a first countermeasure in response to detection of the rapid leak, and the first countermeasure includes operating the indoor fan.

By this means, it is possible to take an appropriate countermeasure in response to the rapid leak of the refrigerant.

(Technology 8) The air conditioner according to any of the preceding Technologies, further comprising: an indoor unit; and a gas sensor that is provided in the indoor unit and outside the refrigerant pipe and detects the refrigerant, wherein in a case where it is determined that the pressure sensor does not detect the rapid leak and the gas sensor detects the refrigerant, the controller detects a minute leak of the refrigerant, and performs a second countermeasure in response to detection of the minute leak.

By this means, it is possible to detect the minute leak of the refrigerant. In addition, the rapid leak and the minute leak can be detected, and thus, different countermeasures can be taken according to each case.

(Technology 9) The air conditioner according to (Technology 8), wherein the second countermeasure includes outputting a notification or an alarm representing at least one of detection of the minute leak, suggestion of stop use of the air conditioner and ventilation, and suggestion of repair of the air conditioner.

By this means, it is possible to take an appropriate countermeasure in response to the minute leak of the refrigerant.

(Technology 10) The air conditioner according to any of the preceding Technologies, further comprising: an indoor unit; and a gas sensor that is provided in the indoor unit and outside the refrigerant pipe and detects the refrigerant, wherein in a case where it is determined that the pressure sensor detects the rapid leak and the gas sensor does not detect the refrigerant, the controller detects outdoor leak of the refrigerant, and performs a third countermeasure in response to detection of the outdoor leak.

By this means, it is possible to detect outdoor leak of the refrigerant. In addition, the rapid leak and outdoor leak can be detected, and thus, different countermeasures can be taken according to each case.

(Technology 11) The air conditioner according to (Technology 10), wherein the air conditioner includes an outdoor fan, and the third countermeasure includes operating the outdoor fan.

By this means, it is possible to take an appropriate countermeasure in response to outdoor leak of the refrigerant.

(Technology 12) The air conditioner according to any of the preceding Technologies, wherein the air conditioner includes an indoor unit and an outdoor unit, and the pressure sensor is provided in a portion of the refrigerant pipe located in the indoor unit.

According to such a pressure sensor, sensitivity of leak detection is relatively high.

(Technology 13) The air conditioner according to (Technology 12), wherein the air conditioner includes a refrigeration cycle, the refrigeration cycle includes the refrigerant pipe, a compressor, and an indoor heat exchanger, and the pressure sensor is provided in a portion of the refrigerant pipe located in the indoor unit, and between the indoor heat exchanger and the compressor.

By this means, pressure information of the refrigerant gas can be acquired regardless of whether the refrigeration cycle is the cooling cycle or the heating cycle.

(Technology 14) A detection device that detects refrigerant leak from an air conditioner, the detection device comprising: a communicator that acquires pressure in formation related to a pressure of a refrigerant flowing through a refrigerant pipe of the air conditioner; and a controller that determines, based on the pressure information, whether or not change in pressure within a predetermined period is larger than a change threshold, and detects a rapid leak of the refrigerant based on a determination result.

(Technology 15) A refrigerant leak detection method for detecting refrigerant leak from an air conditioner, the refrigerant leak detection method comprising: acquiring pressure information related to a pressure of a refrigerant flowing through a refrigerant pipe of the air conditioner by a pressure sensor provided in the refrigerant pipe; determining, based on the pressure information, whether or not change in pressure within a predetermined period is larger than a change threshold; and detecting a rapid leak of the refrigerant based on a determination result.

(Technology 16) A refrigerant leak detection method for detecting refrigerant leak from an air conditioner, the refrigerant leak detection method comprising: acquiring pressure information related to a pressure of a refrigerant flowing through a refrigerant pipe of the air conditioner; determining, based on the pressure information, whether or not change in pressure within a predetermined period is larger than a change threshold; and detecting a rapid leak of the refrigerant based on a determination result.

(Technology 17) A program for causing an air conditioner to execute the refrigerant leak detection method according to (Technology 15) or causing a detection device to execute the refrigerant leak detection method according to (Technology 16).

(Technology 18) A non-transitory computer-readable storage medium in which a computer program is stored, wherein when the computer program is executed by a processor, the refrigerant leak detection method according to (Technology 15) or (Technology 16) is implemented.

According to the detection device, the refrigerant leak detection method, the program, or the storage medium described above, it is possible to detect a rapid leak of a flammable refrigerant from the refrigerant pipe of the air conditioner.

The foregoing is merely specific embodiments of the present disclosure, and the protection scope of the present disclosure is not limited thereto. The present disclosure includes the content described above in the drawings and the specific embodiments described above, but the present disclosure is not limited to the content. Various disclosed embodiments or examples may be combined without departing from the scope or spirit of the present disclosure. Changes that do not depart from functional and structural principles of the present disclosure are within the scope of the claims.

## Claims

1. An air conditioner using a flammable refrigerant, the air conditioner comprising:
a refrigerant pipe through which a refrigerant flow;
a pressure sensor that is provided in the refrigerant pipe and acquires pressure information related to a pressure of the refrigerant in the refrigerant pipe; and
a controller that
acquires the pressure information by the pressure sensor,
determines, based on the pressure information, whether or not change in pressure within a predetermined period is larger than a change threshold, and
detects a rapid leak of the refrigerant based on a determination result.

2. The air conditioner according to claim 1, wherein the change threshold is set based on at least one of a type of the refrigerant, an internal volume of the refrigerant pipe, and a refrigerant amount in the air conditioner.

3. The air conditioner according to claim 1 or 2, wherein the change threshold is set in accordance with a leakage speed equal to or higher than 7.5 kg/h.

4. The air conditioner according to any of the preceding claims, wherein the predetermined period is equal to or less than 30 seconds.

5. The air conditioner according to any of the preceding claims, wherein the controller performs a first countermeasure in response to detection of the rapid leak, and the first countermeasure includes outputting a notification or an alarm representing at least one of detection of the rapid leak and representing an evacuation suggestion.

6. The air conditioner according to any of the preceding claims, further comprising a cutoff valve provided in the refrigerant pipe, wherein
the controller performs a first countermeasure in response to detection of the rapid leak, and
the first countermeasure includes operating the cutoff valve to cut off flow of the refrigerant in the refrigerant pipe.

7. The air conditioner according to any of the preceding claims, wherein
the air conditioner includes an indoor fan,
the controller performs a first countermeasure in response to detection of the rapid leak, and
the first countermeasure includes operating the indoor fan.

8. The air conditioner according to any of the preceding claims, further comprising:
an indoor unit; and
a gas sensor that is provided in the indoor unit and outside the refrigerant pipe and detects the refrigerant, wherein
in a case where it is determined that the pressure sensor does not detect the rapid leak and the gas sensor detects the refrigerant, the controller detects a minute leak of the refrigerant, and performs a second countermeasure in response to detection of the minute leak.

9. The air conditioner according to claim 8, wherein the second countermeasure includes outputting a notification or an alarm representing at least one of detection of the minute leak, suggestion of stop use of the air conditioner and ventilation, and suggestion of repair of the air conditioner.

10. The air conditioner according to any of the preceding claims, further comprising:
an indoor unit; and
a gas sensor that is provided in the indoor unit and outside the refrigerant pipe and detects the refrigerant, wherein
in a case where it is determined that the pressure sensor detects the rapid leak and the gas sensor does not detect the refrigerant, the controller detects outdoor leak of the refrigerant, and performs a third countermeasure in response to detection of the outdoor leak.

11. The air conditioner according to claim 10, wherein
the air conditioner includes an outdoor fan, and
the third countermeasure includes operating the outdoor fan.

12. The air conditioner according to any of the preceding claims, wherein
the air conditioner includes an indoor unit and an outdoor unit, and
the pressure sensor is provided in a portion of the refrigerant pipe located in the indoor unit.

13. The air conditioner according to claim 12, wherein
the air conditioner includes a refrigeration cycle,
the refrigeration cycle includes the refrigerant pipe, a compressor, and an indoor heat exchanger, and
the pressure sensor is provided in a portion of the refrigerant pipe located in the indoor unit, and between the indoor heat exchanger and the compressor.

14. A refrigerant leak detection method for detecting refrigerant leak from an air conditioner, the refrigerant leak detection method comprising:
acquiring pressure information related to a pressure of a refrigerant flowing through a refrigerant pipe of the air conditioner by a pressure sensor provided in the refrigerant pipe;
determining, based on the pressure information, whether or not change in pressure within a predetermined period is larger than a change threshold; and
detecting the rapid leak of the refrigerant based on a determination result.

15. A non-transitory computer-readable storage medium in which a computer program is stored, wherein
when the computer program is executed by a processor, the refrigerant leak detection method according to claim 14 is implemented.
